(19) Europäisches Patentamt / European Patent Office / Office européen des brevets

(11) **EP 2 533 201 B1**

(12) **FASCICULE DE BREVET EUROPEEN**

(45) Date de publication et mention
de la délivrance du brevet:
**20.01.2016 Bulletin 2016/03**

(51) Int Cl.:
*G06T 7/00* *(2006.01)*     *G06T 17/05* *(2011.01)*

(21) Numéro de dépôt: **12290185.3**

(22) Date de dépôt: **05.06.2012**

(54) **Procédé et dispositif pour déterminer automatiquement les contours de hauteurs du relief d'une zone géographique**

Verfahren und Vorrichtung zur automatischen Bestimmung der Konturen der Reliefhöhen eines geographischen Gebiets

Method and apparatus for automatically determining the contours of the relief heights of a geographical area

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.06.2011 FR 1101771**

(43) Date de publication de la demande:
**12.12.2012 Bulletin 2012/50**

(73) Titulaire: **MBDA France**
**92350 Le Plessis-Robinson (FR)**

(72) Inventeur: **Lecuelle, Jérémy**
**92290 Chatenay-Malabry (FR)**

(74) Mandataire: **Gevers France**
**41, avenue de Friedland**
**75008 Paris (FR)**

(56) Documents cités:
**US-A1- 2002 147 567**

• **WEIDNER: "Towards automatic building extraction from high-resolution digital elevation models", ISPRS JOURNAL OF PHOTOGRAMMETRY AND REMOTE SENSING, vol. 50, no. 4, 1 janvier 1995 (1995-01-01), page 38, XP055015765, ISSN: 0924-2716**

• **BAILLARD C ET AL: "Segmentation of urban scenes from aerial stereo imagery", PATTERN RECOGNITION, 1998. PROCEEDINGS. FOURTEENTH INTERNATIONAL CONFERENCE ON, vol. 2, 16 août 1998 (1998-08-16), pages 1405-1407, XP010297785, BRISBANE, QLD., AUSTRALIA DOI: 10.1109/ICPR.1998.711965 ISBN: 978-0-8186-8512-5**

• **NEUBECK A ET AL: "Efficient non-maximum suppression", 2006 18TH INTERNATIONAL CONFERENCE ON PATTERN RECOGNITION, 2006, page 6 PP., XP002666873, IEEE COMPUT. SOC. LOS ALAMITOS, CA, USA ISBN: 0-7695-2521-0**

• **Nadjia BENBLIDIA , Abdelkader ABDELLAOUI, Abderrezak GUESSOUM, Abdel-krim BENSAID: "UTILISATION DE LA MORPHOLOGIE MATEMATIQUE POUR L'ANALYSE DE L'OCCUPATION DE L'ESPACE EN ZONES URBAINES ET PÉRIURBAINES PRÉSAHARIENNES : CAS DE LAGHOUAT (ALGÉRIE)", Télédétection, vol. 6, no. 2 2006, pages 177-190, XP002679880, Extrait de l'Internet: URL:http://www.teledetection.net/ upload/te ledetection/pdf/20070226111247.pdf [extrait le 2012-07-13]**

• **"Top-hat transform", www.wikipedia.org , 4 November 2013 (2013-11-04), Retrieved from the Internet: URL:http://en.wikipedia.org/wiki/Top-hat_t ransform [retrieved on 2014-01-20]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

La présente invention concerne un procédé et un dispositif pour déterminer automatiquement les contours de hauteurs du relief d'une zone géographique, en particulier terrestre ou sous-marine.

Dans le cas d'une application militaire, on sait que la connaissance des hauteurs du relief d'une zone terrestre particulière est, notamment, très utile pour aider au déploiement d'éléments de systèmes d'armes de défense sol-air. Ces éléments nécessitent, en effet, d'être placés à des positions leur permettant de bénéficier de la visibilité la plus étendue possible, tout en s'affranchissant de masquages créés par le relief, afin de permettre à des capteurs de réaliser des détections de cibles le plus tôt possible et pour des distances les plus grandes possibles, et à des éléments d'interception et de neutralisation de profiter au mieux de leur portée.

De telles hauteurs du relief peuvent notamment être utilisées lors de la préparation de missions de défense sol-air autour d'un site sensible, en permettant d'exploiter les hauteurs locales tout en s'affranchissant des variations lentes de l'altitude du relief.

On notera que, pour obtenir une mise en oeuvre satisfaisante d'un tel procédé de détermination des contours des hauteurs du relief d'une zone géographique particulière, ce dernier doit pouvoir être en mesure d'éliminer les variations lentes de pente dans toutes les directions à la fois, et doit, de plus, pouvoir être utilisé par tout type d'élément du système d'arme de défense sol-air sans nécessiter de modification trop importante.

Des solutions usuelles pour remédier à ce problème prévoient :

a) un filtrage basse fréquence appliqué à l'image des altitudes (utilisation de la transformée de Fourier de l'image) ; ou
b) une classification appliquée aux images.

Toutefois, ces solutions usuelles présentent notamment les inconvénients respectifs suivants :

- une difficulté à obtenir les hauteurs pertinentes en raison d'une difficulté de réglage des paramètres (fréquence de coupure du filtre, seuillage des altitudes,...), pour la solution a) ; et
- pas de suppression des variations lentes d'altitudes, pour la solution b). Les procédés de classification sont très utiles pour délimiter des zones de natures différentes, comme des forêts, des villes, des routes, mais ne sont a priori pas adaptés à l'extraction d'objets du relief.

Ces solutions usuelles ne sont donc pas satisfaisantes, notamment pour les applications envisagées.

L'article "Towards automatic building extraction from high-resolution digital elevation models" par Uwe Weidner décrit une méthode d'extraction de bâtiments basée sur la suppression de la surface de fond du relief par un filtrage chapeau haut de forme. Les bâtiments sont ensuite segmentés en seuillant cette image filtrée et en simplifiant les polygones obtenus.

Par ailleurs, on connaît, par le document EP-0 863 487, un procédé et un dispositif pour déterminer automatiquement le contour de vallées d'une zone géographique.

La présente invention a pour objet de remédier aux inconvénients précités. Elle concerne un procédé pour déterminer automatiquement de façon rapide, simple, fiable et à coût réduit, les contours des hauteurs d'une zone géographique particulière, et ceci quelles que soient les variations lentes d'altitudes du relief dans toutes les directions.

A cet effet, selon l'invention, ledit procédé est remarquable en ce que l'on réalise, de façon automatique, les opérations successives décrites dans la revendications 1.

Ainsi, grâce à l'invention, on est en mesure de déterminer automatiquement de façon rapide, simple, fiable et à coût réduit, les contours des hauteurs d'une zone géographique déterminée. De plus, cette détermination peut être réalisée quelles que soient les variations lentes d'altitudes du relief dans toutes les directions, notamment grâce à la suppression de la surface de fond du relief.

Le procédé conforme à l'invention permet donc d'extraire d'une image numérisée de ladite zone géographique, cette image étant issue de préférence d'un fichier usuel de type DTED (« Digital Terrain Elevation Data » en anglais), des contours des hauteurs, et de présenter ces contours sous forme d'un ensemble de polygones, un polygone représentant une figure géométrique fermée formée d'une suite de segments de droite. Une telle représentation sous forme d'un ensemble de polygones peut être utilisée avantageusement dans le cadre d'une exploitation militaire, en particulier pour placer des éléments d'un système d'armes de défense sol-air, ou dans le cadre d'une exploitation civile.

Comme précisé ci-dessous, ledit procédé de traitement automatique utilise des paramètres dits de réglage qui sont susceptibles d'être réglés, c'est-à-dire modifiés, par un opérateur. Ces paramètres de réglage permettent notamment de faire varier les caractéristiques dimensionnelles des hauteurs du relief, extraites de la zone géographique considérée, ce qui permet d'appliquer l'invention à tout type de relief terrestre, et en particulier pour tout type d'éléments terrestres à déployer. Le procédé conforme à l'invention est également applicable à tout type de relief sous-marin (exploitation sous-marine), ainsi qu'à tout type de relief planétaire autre que terrestre (exploration spatiale).

Dans un mode de réalisation préféré, à l'étape d), on superpose ledit ensemble de polygones de façon conforme sur une image de ladite zone géographique de manière à obtenir une image composée, que l'on peut notamment afficher ou imprimer.

Par ailleurs, de façon avantageuse :

- à l'étape a), pour supprimer la surface de fond du relief, on utilise un algorithme dit du « chapeau haut de forme», comprenant un élément structurant qui est réglable ; et/ou
- la valeur de seuil utilisée à l'étape b) est réglable ; et/ou
- à l'étape d), on met en oeuvre un algorithme de simplification qui utilise un paramètre de tolérance indiquant le degré de simplification, qui est également réglable.

Dans un mode de réalisation préféré, on analyse, dans une étape supplémentaire, ledit ensemble de polygones pour définir au moins un, mais de préférence une pluralité d'attributs permettant de caractériser lesdits polygones. De façon préférentielle, on met en évidence chaque attribut ainsi déterminé sur ladite image composée, par exemple à l'aide d'un code de couleur particulier, d'un signe ou symbole caractéristique et/ou d'une valeur alphanumérique.

Avantageusement, dans ladite étape supplémentaire, on détermine au moins certains des attributs suivants, qui sont indépendants des altitudes du relief :

- l'éloignement par rapport à un objectif ;
- au moins la superficie d'un polygone ;
- au moins un rectangle majorant simple qui est associé à un polygone ; et
- au moins un polygone convexe majorant.

En outre, en variante ou en complément, on détermine également, dans ladite étape supplémentaire, au moins certains des attributs suivants, qui dépendent, quant à eux, des altitudes du relief :

- l'altitude moyenne ;
- l'écart-type des altitudes ;
- l'altitude maximale ; et
- des points hauts.

Avantageusement, pour déterminer lesdits points hauts, on recherche des points présentant des hauteurs maximales locales, à l'aide d'un seuil qui est réglable, et on exclut tous les points trouvés qui sont externes auxdits contours bruts, comme précisé ci-dessous.

La présente invention concerne également un dispositif pour déterminer automatiquement (de façon rapide, simple, fiable et à coût réduit) le contour des hauteurs d'une zone géographique particulière, tel que décrit dans la revendication 7.

Ledit dispositif s'applique à tout type de relief, aussi bien terrestre que sous marin. Il prévoit donc de supprimer la surface de fond du relief qui contient les variations lentes des altitudes. Le seuillage des altitudes ainsi modifiées permet alors de générer une image binaire des hauteurs qui sera ensuite utilisée pour extraire les contours.

Dans un mode de réalisation particulier, ledit dispositif comporte également :

- des moyens pour analyser ledit ensemble de polygones dans le but de définir au moins un attribut permettant de caractériser lesdits polygones ;
- des moyens permettant à un opérateur d'entrer des données, et notamment lesdits paramètres de réglage ; et/ou
- lesdits moyens utilisateurs.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.
Les figures 2A et 2B montrent schématiquement des profils verticaux permettant d'illustrer la suppression d'une surface de fond.
La figure 3 montre schématiquement une image binaire obtenue après une étape de seuillage.
Les figures 4 et 5 montrent schématiquement deux graphiques permettant d'expliquer les caractéristiques d'un paramètre qui est utilisé pour déterminer des points hauts.
La figure 6 montre schématiquement une image composée susceptible d'être obtenue à l'aide d'un dispositif conforme à l'invention.

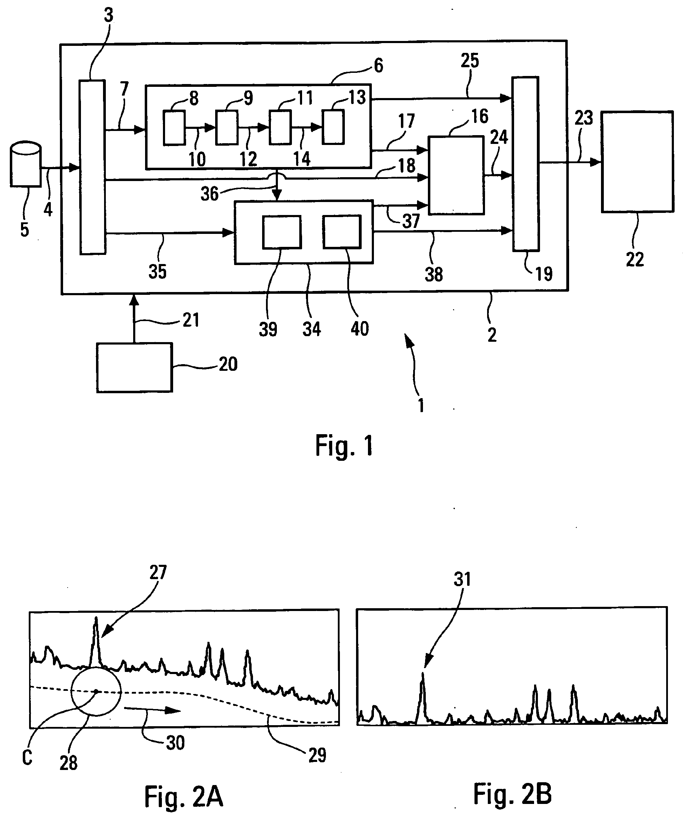

Le dispositif 1 conforme à l'invention et représenté schématiquement sur la figure 1 est destiné à déterminer les contours des hauteurs d'une zone géographique particulière, et ceci quelles que soient les variations lentes d'altitudes du relief dans toutes les directions.

Pour ce faire, ledit dispositif 1 comporte, selon l'invention, une unité de traitement 2 qui comprend :

- des moyens 3 d'acquisition de données, pour recevoir une image de la zone géographique ZO à analyser. Cette image qui est de type numérisé et qui contient des données altimétriques de points de ladite zone géographique ZO, est reçue (via une liaison 4. de transmission de données) d'un fichier, de préférence d'un fichier DTED (« Digital Terrain Elevation Data » en anglais), qui est stocké dans une base de données 5 usuelle ; et
- des moyens 6 de traitement d'image, qui sont reliés par une liaison 7 auxdits moyens 3.

Selon l'invention, lesdits moyens 6 comprennent :

- des moyens 8 pour supprimer, à partir de ladite image reçue des moyens 3, la surface de fond du relief

qui illustre les variations lentes des altitudes de ladite zone géographique ;

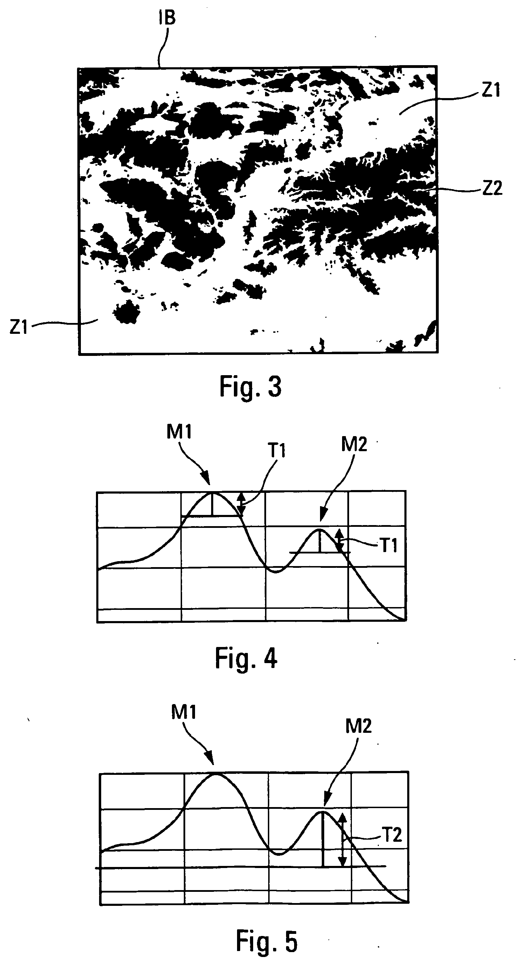

- des moyens 9 qui sont reliés par l'intermédiaire d'une liaison 10 auxdits moyens 8 et qui sont formés de manière à réaliser un seuillage afin de former une image binaire IB du relief vu de dessus (figure 3), contenant uniquement des reliefs dont les hauteurs sont supérieures à une valeur de seuil ;

- des moyens 11 qui sont reliés par l'intermédiaire d'une liaison 12 auxdits moyens 9 et qui sont formés de manière à extraire de cette image binaire IB (comprenant deux types Z1 et Z2 différents de zones), des contours bruts des hauteurs du relief. Ces contours bruts illustrent les frontières entre les deux types Z1 et Z2 différents de zones ; et

- des moyens 13 qui sont reliés par l'intermédiaire d'une liaison 14 auxdits moyens 11 et qui sont formés de manière à simplifier lesdits contours bruts afin d'obtenir un ensemble de polygones qui illustrent les contours (recherchés) des hauteurs du relief de ladite zone géographique.

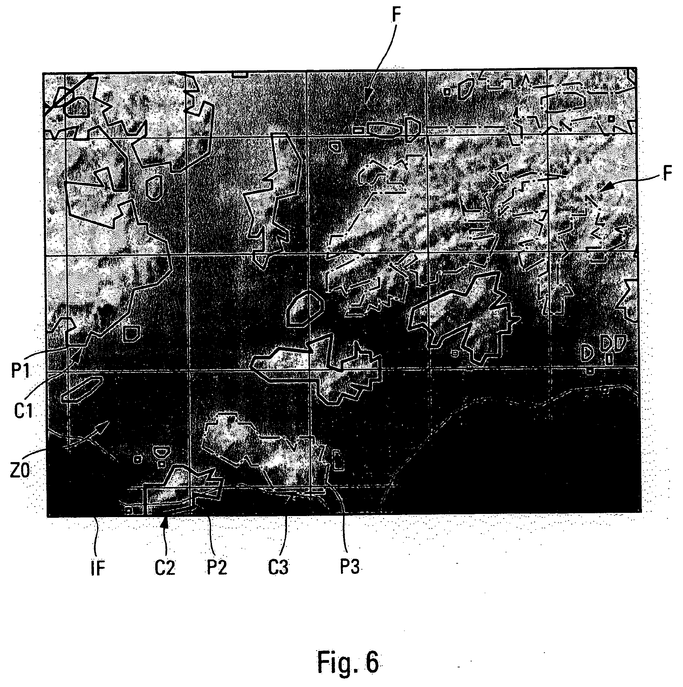

En outre, ladite unité de traitement 2 comporte, de plus, des moyens 16 qui sont, par exemple, reliés par l'intermédiaire de liaisons 17 et 18 respectivement auxdits moyens 6 et 3 et qui sont formés de manière à superposer ledit ensemble de polygones (reçu des moyens 6) sur une image de ladite zone géographique (reçue des moyens 3) par exemple une photo réalisée par un satellite. Cette superposition est réalisée de façon conforme, c'est-à-dire que l'on superpose à chaque fois les informations relatives aux mêmes coordonnées dans le plan de l'image. On obtient alors une image dite composée (ou hybride) IF, telle que celle représentée par exemple sur la figure 6, qui peut être transmise par l'intermédiaire de moyens 19 de transmission d'informations.

En outre, ledit dispositif 1 comporte, de plus :

- des moyens 20, par exemple un clavier ou tout autre moyen de saisie de données, qui sont par exemple reliés par l'intermédiaire d'une liaison 21 à ladite unité de traitement 2 et qui permettent à un opérateur d'entrer des données dans ladite unité de traitement 2, et en particulier des paramètres de réglage, comme précisé ci-dessous ; et

- des moyens utilisateurs 22, en particulier des moyens (d'affichage ou d'impression) qui permettent de présenter à un opérateur les résultats des traitements mis en oeuvre par l'unité de traitement 2 (et reçus via une liaison 23 desdits moyens 19). Lesdits moyens 19 de l'unité 2 sont reliés par l'intermédiaire de liaisons 24 et 25 respectivement auxdits moyens 16 et 6.

Ainsi, le dispositif 1 conforme à l'invention est en mesure de déterminer automatiquement de façon rapide, simple, fiable et à coût réduit, les contours Ci des hauteurs d'une zone géographique ZO déterminée. De plus, cette détermination peut être réalisée quelles que soient les variations lentes d'altitudes du relief dans toutes les directions, notamment grâce à la suppression de la surface de fond du relief, mise en oeuvre par les moyens 8.

Ledit dispositif 1 permet donc d'extraire d'une image numérisée de ladite zone géographique, cette image étant issue de préférence d'un fichier usuel de type DTED (« Digital Terrain Elévation Data » en anglais), des contours Ci des hauteurs, et de présenter ces contours Ci sous forme d'un ensemble de polygones Pi. De façon usuelle, un polygone Pi représente une figure géométrique fermée, formée d'une suite de segments de droite. Une telle représentation sous forme d'un ensemble de polygones peut être utilisée dans le cadre d'une exploitation militaire, en particulier pour placer des éléments d'un système d'armes de défense sol-air, ou dans le cadre d'une exploitation civile.

Comme précisé ci-dessous, ledit dispositif 1 utilise des paramètres de réglage qui sont susceptibles d'être réglés, c'est-à-dire modifiés, par un opérateur à l'aide des moyens 20, et qui permettent de faire varier les caractéristiques dimensionnelles des hauteurs du relief extraites de la zone géographique considérée, ce qui permet d'appliquer l'invention à tout type de relief terrestre, et notamment pour tout type d'élément terrestre à déployer. Le dispositif 1 conforme à l'invention est également applicable à tout type de relief sous-marin (exploitation sous-marine), ainsi qu'à tout type de relief planétaire autre que terrestre (exploration spatiale).

Lesdits moyens 8 ont donc pour objet de supprimer la surface de fond du relief, c'est-à-dire les variations d'altitudes très progressives sur de grandes distances (tel que pour un glacis ou un faux-plat) par rapport aux variations d'altitudes significatives correspondant aux reliefs dont on souhaite extraire les contours, à savoir des reliefs (tels que des buttes et des collines) qui peuvent notamment être exploités pour le déploiement d'éléments d'un système d'armes de défense.

Pour ce faire, lesdits moyens 8 emploient un algorithme approprié du type usuel dit « chapeau haut de forme» (ou « Top Hat » en anglais), utilisant un élément structurant qui est réglable (à l'aide des moyens 20).

De façon usuelle, cet algorithme utilise une sphère (ou boule) comme élément structurant, et son expression mathématique est la suivante :

$$f - O(f,g),$$ f étant l'image du relief brut, g l'élément structurant et O l'opérateur d'ouverture morphologique.

Le rayon de la sphère, typiquement de l'ordre de 2500m, est un paramètre de réglage qui permet d'ajuster le résultat.

La suppression de la surface de fond est réalisée, de préférence, grâce à un algorithme particulier, dit de « la boule roulante » (« Rolling Ball» en anglais), qui est un algorithme de traitement d'images du domaine de la morphologie mathématique.

Cette étape est mise en oeuvre en faisant rouler, sous le relief brut 27, une boule 28 de rayon immédiatement plus grand que le rayon de courbure des reliefs que l'on souhaite extraire, comme représenté sur la figure 2A (qui est simplifié à un profil vertical). On construit ainsi le domaine 29 (représenté par des traits interrompus sur la figure 2A) formé des points parcourus par le centre C de la boule 28 lors de son déplacement (illustré par une flèche 30). On soustrait aux altitudes du relief brut les altitudes de ce domaine 29 préalablement rehaussé du rayon de la boule, de manière à obtenir le relief 31 représenté sur la figure 2B.

La suppression du fond permet de redéfinir les altitudes par rapport à la surface de fond. L'extraction des hauteurs peut alors être réalisée par un seuillage de l'image. Les moyens 9 ont pour objet de réaliser le seuillage des altitudes du relief 31 obtenu, de manière à ne conserver que les reliefs suffisamment hauts pour être exploités, en particulier pour le déploiement d'éléments d'un système de défense. La valeur de seuil utilisée (par exemple de l'ordre de 50m) est réglable (ou paramétrable) par un opérateur à l'aide des moyens 20. Grâce au traitement mis en oeuvre par lesdits moyens 9, on obtient une image binaire IB (noir et blanc) du relief vu de dessus, comme représenté sur la figure 3.

A partir de cette image binaire IB, lesdits moyens 11 extraient les contours des hauteurs du relief mis en évidence lors de l'étape précédente (frontières entre les parties blanches Z1 et les parties noires Z2 (représentant les reliefs extraits) de l'image binaire IB), qui sont ensuite simplifiés par lesdits moyens 13 afin d'obtenir une représentation des contours de ces hauteurs sous forme d'un ensemble de polygones.

Les contours bruts obtenus suite à l'extraction mise en oeuvre par les moyens 11 sont en quatre-connexité.

Afin d'obtenir des contours faciles à exploiter et à afficher, les moyens 13 les simplifier pour diminuer le nombre de points qui les composent. L'algorithme de simplification utilisé est, de préférence, l'algorithme connu de Douglas-Peucker, qui prend en compte un paramètre de tolérance. Ce paramètre de tolérance, qui peut être ajusté par un opérateur (à l'aide des moyens 20), permet de régler le degré de simplification, puisqu'il indique l'écart maximum toléré entre le contour d'origine et le contour simplifié.

Par ailleurs, dans un mode de réalisation préféré, ladite unité de traitement 2 comporte, de plus, des moyens 34 (qui sont reliés par l'intermédiaire de liaisons 35, 36, 37, et 38 respectivement auxdits moyens 3, 6, 16 et 19) pour analyser ledit ensemble de polygones dans le but de définir au moins un attribut permettant de caractériser lesdits polygones.

En effet, à l'issue de l'extraction (réalisée par les moyens 6), la seule information dont on dispose sur les hauteurs est leur contour. La caractérisation mise en oeuvre par les moyens 34 est destinée à définir des attributs (autres que le contour) qui peuvent intervenir pour décrire les hauteurs et les contours obtenus. On peut les classer en deux catégories :

- les attributs indépendants des altitudes, qui décrivent la forme de la hauteur : enveloppe convexe, rectangle majorant,...; et
- les attributs destinés à décrire les altitudes de la hauteur : altitude moyenne, variance des altitudes, points hauts,... Dans ce cas, les contours des hauteurs (déterminés à partir de l'image des altitudes modifiées) doivent être reportés sur l'image des altitudes réelles, afin d'effectuer les différentes mesures.

De préférence, on met en évidence chaque attribut ainsi déterminé sur ladite image composée IF, par exemple à l'aide d'un code de couleur particulier, d'un signe ou symbole caractéristique et/ou d'une valeur alphanumérique.

A titre d'illustration, lesdits moyens 34 comprennent des moyens 39 qui peuvent prendre en compte, comme attributs indépendants des altitudes :

A/ l'éloignement qui permet de distinguer les hauteurs en fonction de leur éloignement par rapport à un objectif (ou cible) particulier. Dans une problématique de déploiement, cela permet de distinguer les hauteurs qui pourront recevoir des systèmes d'armes, celles qui ne recevront pas de systèmes d'armes mais sont à prendre en compte puisqu'elles peuvent gêner la défense, et celles qui ne sont pas à prendre en compte. Ces trois catégories peuvent être caractérisées de la manière suivante : proche (jusqu'à 8km par exemple), lointaine (jusqu'à 20km par exemple) et très lointaine (au-delà de 20km) ;

B/ l'aire, c'est-à-dire la superficie de la hauteur calculée à partir du contour brut (avant simplification) ;

C/ le type de hauteurs. Les hauteurs peuvent être classées en différentes catégories, par exemple en quatre catégories, en fonction de leur superficie. A titre d'illustration, les catégories, de la moins étendue à la plus étendue, peuvent être : les buttes (jusqu'à. 1 km$^2$), les collines (jusqu'à 9km$^2$), les massifs (jusqu'à 400km$^2$) et les chaînes de montagne ;

D/ un rectangle majorant simple qui désigne le rectangle le plus petit, dont les côtés sont parallèles à l'axe des abscisses ou à l'axe des ordonnées, et qui englobe un polygone ; et

E/ un polygone convexe majorant qui désigne l'enveloppe convexe du contour de la hauteur.

En outre, lesdits moyens 34 comprennent également des moyens 40 qui peuvent prendre en compte, comme attributs dépendant des altitudes :

- l'altitude moyenne ;
- l'écart-type des altitudes ;
- l'altitude maximale ; et
- des points hauts.

Pour déterminer des points hauts, lesdits moyens 40 recherchent des points présentant des hauteurs maximales locales, à l'aide d'un seuil qui est réglable, puis ils excluent les points qui sont externes aux contours bruts.

On notera que, pour permettre à un système d'armes d'avoir la meilleure visibilité, il doit être placé sur un point culminant au sein d'une hauteur. Aussi, afin d'obtenir une information complète, on suppose qu'une hauteur peut contenir plusieurs points hauts (ou culminants) qui correspondent alors aux maximums locaux d'altitudes.

La fonctionnalité de recherche d'extremums locaux permet d'extraire la position des maximums locaux d'une image à niveaux de gris. Cette fonction dispose du paramètre usuel, dit « Noise Tolerance », qui permet de filtrer les extremums locaux pour retenir uniquement ceux qui sont significatifs. Il permet de définir le seuil qui sera appliqué aux altitudes, à l'aide de la formule suivante :

$$S = z_{max} - T$$

dans laquelle :

- $Z_{max}$ représente l'altitude du maximum local considéré ; et
- T représente ledit paramètre « Noise Tolerance ».

On considère alors la zone continue autour du maximum local dont les altitudes sont au-dessus de ce seuil. Le maximum est alors retenu s'il représente un maximum global sur cette zone continue. Ainsi, à titre d'illustration :

- dans l'exemple de la figure 4, en présence d'une valeur T1 faible pour T, les deux maxima M1 et M2 sont retenus ; tandis que
- dans l'exemple de la figure 5, le paramètre T présente une valeur T2 plus grande. La zone continue définie sous le second maximum M2 contient le premier extremum M1 dont l'altitude est plus grande. Le second maximum M2 ne sera donc pas retenu.

Pour régler ce paramètre T, on utilise l'écart-type des altitudes qui rend compte de la plage des altitudes présentes sur la hauteur, tout en étant peu sensible aux valeurs extrêmes. Sur les hauteurs de petites surfaces qui présentent une variation faible des altitudes, on retient les maximums locaux de faible importance, alors que sur une hauteur très étendue et qui contient des altitudes très différentes (par exemple un massif montagneux), on retient uniquement les maximums locaux très significatifs. La définition du paramètre T retenue est la suivante :

$$T = k \cdot \sigma$$

dans laquelle :

- k représente le coefficient écart-type défini par un opérateur (proche de 1) ; et
- σ représente l'écart-type des altitudes (en m).

Le réglage dudit coefficient k permet d'ajuster la condition de prise en compte des points hauts. Une valeur faible conduira à accepter de nombreux points hauts. Au contraire, une valeur élevée durcira la condition de prise en compte des points hauts, ce qui entraînera un nombre de points hauts plus faible.

Par ailleurs, la dernière étape mise en oeuvre par lesdits moyens 40 consiste à garder uniquement les points hauts (ainsi trouvés) qui sont intérieurs aux contours simplifiés. La recherche des points hauts est, en effet, effectuée à partir du contour brut (avant simplification). Aussi, dans certaines situations, des points hauts deviennent extérieurs au contour après simplification. Il convient donc de les exclure.

Les points hauts peuvent être mis en évidence sur une image IF par l'intermédiaire de triangles indiquant leur emplacement géographique, auxquels sont adjointes des valeurs indiquant les altitudes correspondantes.

Sur la figure 6, on a représenté une image composée IF comprenant un fond F illustrant une image (par exemple satellitaire), à laquelle on a superposé les contours, c'est-à-dire l'ensemble des polygones Pi obtenus grâce à l'invention.

Sur la figure 6, on a mis en évidence certains attributs permettant d'apporter des informations sur les contours. Ainsi, à titre d'illustration, on a représenté :

- sous forme de polygones P1 en trait continu moyen, des contours C1 qui sont éloignés ; et
- sous formes respectives de polygones P2 et P3 en trait continu épais et en trait mixtes, des contours C2 et C3 présentant des catégories différentes (relativement à leur surface).

## Revendications

1. Procédé pour déterminer automatiquement les contours de hauteurs du relief, tel que des buttes et des collines, d'une zone géographique (ZO), en particulier terrestre ou sous-marine, procédé selon lequel on réalise, de façon automatique, les opérations successives suivantes :

a) à partir d'une image de ladite zone géographique (ZO), qui contient des données altimétriques de points de cette dernière, on supprime la surface de fond du relief, qui illustre les variations lentes des altitudes de ladite zone géographique (ZO), en mettant en oeuvre un algorithme dit du chapeau haut de forme, qui utilise un élément structurant (28) qui est réglable ;

b) à partir des résultats de l'étape a), on réalise un seuillage pour former une image binaire (IB) du relief vu de dessus, contenant uniquement des reliefs dont les hauteurs sont supérieures à une valeur de seuil qui est réglable, ledit seuillage étant réalisé de manière à ne conserver que les reliefs suffisamment hauts pour être exploités ;

c) on extrait de cette image binaire (IB) qui comprend deux types (Z1, Z2) différents de zones, des contours bruts des hauteurs du relief, illustrant les frontières entre ces deux types (Z1, Z2) différents de zones ;

d) on simplifie lesdits contours bruts de manière à obtenir un ensemble de polygones (P1, P2, P3) illustrant les contours (C1, C2, C3) des hauteurs du relief de ladite zone géographique (ZO) ; et

dans une étape supplémentaire, on analyse ledit ensemble de polygones (P1, P2, P3) pour définir au moins un attribut permettant de caractériser lesdits polygones (P1, P2, P3)

**caractérisé en ce que** le au moins un attribut comprend au moins des points hauts, et pour déterminer les points hauts, on recherche des points présentant des hauteurs maximales locales (M 1, M2), à l'aide d'un seuil qui est réglable, et on exclut tous les points trouvés qui sont externes auxdits contours bruts.

2. Procédé selon la revendication 1,
**caractérisé en ce qu'**à l'étape d), on superpose ledit ensemble de polygones (P1, P2, P3) de façon conforme sur une image (F) de ladite zone géographique (ZO) de manière à obtenir une image composée (IF).

3. Procédé selon l'une des revendications 1 et 2,
**caractérisé en ce qu'**à l'étape a), on utilise une sphère comme élément structurant.

4. Procédé selon la revendication 2,
**caractérisé en ce que** l'on met en évidence sur ladite image composée (IF), ledit attribut.

5. Procédé selon l'une quelconque des revendications précédentes, **caractérisé en ce que** l'on détermine au moins certains des attributs suivants, qui sont indépendants des altitudes du relief :

- l'éloignement par rapport à un objectif ;

- au moins la superficie d'un polygone ;
- au moins un rectangle majorant simple qui est associé à un polygone ; et
- au moins un polygone convexe majorant.

6. Procédé selon l'une quelconque des revendications précédentes, **caractérisé en ce que** l'on détermine au moins certains des attributs suivants, qui dépendent des altitudes du relief :

- l'altitude moyenne ;
- l'écart-type des altitudes ;
- l'altitude maximale ; et
- des points hauts.

7. Dispositif pour déterminer automatiquement les contours des hauteurs du relief, tel que des buttes et des collines, d'une zone géographique (ZO), en particulier terrestre ou sous-marine, ledit dispositif (1) comportant :

- des moyens (3) pour recevoir une image de ladite zone géographique (ZO), qui contient des données altimétriques de points de cette dernière (ZO) ;
- des moyens (8) pour supprimer, à partir de ladite image, la surface de fond du relief qui illustre les variations lentes des altitudes de ladite zone géographique (ZO), en mettant en oeuvre un algorithme dit du chapeau haut de forme, qui utilise un élément structurant (28) qui est réglable ;
- des moyens (9) pour réaliser un seuillage afin de former une image binaire (IB) du relief vu de dessus, contenant uniquement des reliefs dont les hauteurs sont supérieures à une valeur de seuil qui est réglable, ledit seuillage étant réalisé de manière à ne conserver que les reliefs suffisamment hauts pour être exploités ;
- des moyens (11) pour extraire de cette image binaire (IB) qui comprend deux types (Z1, Z2) différents de zones, des contours bruts des hauteurs du relief, illustrant les frontières entre ces deux types (Z1, Z2) différents de zones ;
- des moyens (13) pour simplifier lesdits contours bruts de manière à obtenir un ensemble de polygones (P1, P2, P3) illustrant lesdits contours (C1, C2, C3) des hauteurs du relief de ladite zone géographique (ZO), en mettant en oeuvre un algorithme de simplification qui utilise un paramètre de tolérance indiquant le degré de simplification, qui est réglable ;
- des moyens (19) pour transmettre ledit ensemble de polygones (P1, P2, P3) à des moyens utilisateurs (22) ; et
- des moyens (34) pour analyser ledit ensemble de polygones (P1, P2, P3) dans le but de définir au moins un attribut permettant de caractériser lesdits polygones (P1, P2, P3)

voir rev. 1 au moins des points hauts, des points présentant des hauteurs maximales locales (M1, M2) étant recherchés, à l'aide d'un seuil qui est réglable, pour déterminer les points hauts et tous les points trouvés qui sont externes auxdits contours bruts étant exclus

**8.** Dispositif selon la revendication 7,
**caractérisé en ce qu'**il comporte, de plus, des moyens (16) pour superposer ledit ensemble de polygones (P1, P2, P3) de façon conforme sur une image (F) de ladite zone géographique de manière à obtenir une image composée (IF).

**9.** Dispositif selon l'une des revendications 7 à 8,
**caractérisé en ce qu'**il comporte, de plus, des moyens (20) permettant à un opérateur d'entrer des données dans ledit dispositif (1).

**10.** Dispositif selon l'une des revendications 7 à 9,
**caractérisé en ce qu'**il comporte, de plus, lesdits moyens utilisateurs (22).


**Patentansprüche**

**1.** Verfahren zum automatischen Bestimmen der Konturen der Höhen von Reliefs wie Anhöhen und Hügel einer geografischen Zone (ZO), insbesondere auf dem Erdboden oder im Wasser, wobei gemäß dem Verfahren die folgenden aufeinanderfolgenden Schritte automatisch durchgeführt werden:

a) ausgehend von einem Bild der geografischen Zone (ZO), das Höhenmessungsdaten von Punkten derselben enthält, Entfernen der Grundfläche des Reliefs, die langsame Höhenänderungen der geografischen Zone (ZO) veranschaulicht, durch Umsetzen eines Zylinderalgorithmus, der ein regulierbares Strukturelement (28) verwendet,
b) ausgehend von den Ergebnissen von Schritt a), Durchführen einer Schwellwertsegmentierung, um ein binäres Bild (IB) des Reliefs von oben zu bilden, das nur Reliefs enthält, deren Höhen höher als ein regulierbarer Grenzwert sind, wobei die Schwellwertsegmentierung derart durchgeführt wird, dass nur die Reliefs behalten werden, die ausreichend hoch für eine Verwendung sind,
c) Extrahieren, aus diesem binären Bild (IB), das zwei unterschiedliche Typen von Zonen (Z1, Z2) umfasst, Rohkonturen der Reliefhöhen, die die Grenzen zwischen diesen zwei unterschiedlichen Typen von Zonen (Z1, Z2) veranschaulichen,
d) Vereinfachen der Rohkonturen derart, dass eine Gruppe von Vielecken (P1, P2, P3) entsteht, die die Konturen (C1, C2, C3) der Reliefhöhen der geografischen Zone (ZO) veranschaulichen, und

bei einem zusätzlichen Schritt, Analysieren der Gruppe von Vielecken (P1, P2, P3), um mindestens ein Attribut festzulegen, das die Charakterisierung der Vielecke (P1, P2, P3) erlaubt, **dadurch gekennzeichnet, dass** das mindestens eine Attribut mindestens Hochpunkte umfasst, und, um Hochpunkte zu bestimmen, mit Hilfe eines regulierbaren Grenzwerts Punkte gesucht werden, die lokale Maximalhöhen (M1, M2) aufweisen, und alle gefundenen Punkte ausgeschlossen werden, die sich außerhalb dieser Rohkonturen befinden.

**2.** Verfahren nach Anspruch 1,
**dadurch gekennzeichnet, dass** in Schritt d) die Gruppe von Vielecken (P1, P2, P3) derart konform auf ein Bild (F) der geografischen Zone (ZO) gelegt wird, dass ein zusammengesetztes Bild (IF) entsteht.

**3.** Verfahren nach einem der Ansprüche 1 und 2,
**dadurch gekennzeichnet, dass** in Schritt a) eine Sphäre als Strukturelement verwendet wird.

**4.** Verfahren nach Anspruch 2,
**dadurch gekennzeichnet, dass** auf dem zusammengesetzten Bild (IF) das Attribut hervorgehoben wird.

**5.** Verfahren nach einem der vorangehenden Ansprüche,
**dadurch gekennzeichnet, dass** mindestens einige der folgenden Attribute bestimmt werden, die von den Höhen des Reliefs unabhängig sind:

- Entfernung im Verhältnis zu einem Ziel,
- mindestens die Oberfläche eines Vielecks,
- mindestens ein einfaches majorisierendes Viereck, das einem Vieleck zugeordnet ist, und
- mindestens ein majorisierendes konvexes Vieleck.

**6.** Verfahren nach einem der vorangehenden Ansprüche,
**dadurch gekennzeichnet, dass** mindestens einige der folgenden Attribute bestimmt werden, die von den Höhen des Reliefs abhängig sind:

- die mittlere Höhe,
- die Höhen-Standardabweichung,
- die maximale Höhe und
- Hochpunkte.

**7.** Vorrichtung zum automatischen Bestimmen der Konturen der Höhen von Reliefs wie Anhöhen und Hügel einer geografischen Zone (ZO), insbesondere auf dem Erdboden oder im Wasser, wobei die Vorrichtung (1) aufweist:

- Mittel (3), um ein Bild der geografischen Zone (ZO) zu empfangen, das Höhenmessungsdaten von Punkten derselben (ZO) enthält,
- Mittel (8), um aus dem Bild die Grundfläche des Reliefs zu entfernen, die langsame Höhenänderungen der geografischen Zone (ZO) veranschaulicht, durch Umsetzen eines Zylinderalgorithmus, der ein regulierbares Strukturelement (28) verwendet,
- Mittel (9), um eine Schwellwertsegmentierung durchzuführen, um ein binäres Bild (IB) des Reliefs von oben zu bilden, das nur Reliefs enthält, deren Höhen höher als ein regulierbarer Grenzwert sind, wobei die Schwellwertsegmentierung derart durchgeführt wird, dass nur die Reliefs behalten werden, die ausreichend hoch für eine Verwendung sind,
- Mittel (11), um aus diesem binären Bild (IB), das zwei unterschiedliche Typen von Zonen (Z1, Z2) umfasst, Rohkonturen der Reliefhöhen, die die Grenzen zwischen diesen zwei unterschiedlichen Typen von Zonen (Z1, Z2) veranschaulichen, zu extrahieren,
- Mittel (13), um die Rohkonturen derart zu vereinfachen, dass eine Gruppe von Vielecken (P1, P2, P3) entsteht, die die Konturen (C1, C2, C3) der Reliefhöhen der geografischen Zone (ZO) veranschaulichen, durch Umsetzen eines Vereinfachungsalgorithmus, der einen den Vereinfachungsgrad anzeigende Toleranzparameter verwendet, der regulierbar ist, und
- Mittel (19), um die Gruppe von Vielecken (P1, P2, P3) an Benutzermittel (22) zu übertragen,
- Mittel (34), um die Gruppe von Vielecken (P1, P2, P3) zu analysieren, um mindestens ein Attribut festzulegen, das die Charakterisierung der Vielecke (P1, P2, P3) erlaubt, **dadurch gekennzeichnet, dass** das mindestens eine Attribut mindestens Hochpunkte umfasst, wobei Punkte, die lokale Maximalhöhen (M1, M2) aufweisen, mit Hilfe eines regulierbaren Grenzwerts gesucht werden, um die Hochpunkte und alle gefundenen Punkte zu bestimmen, die sich außerhalb dieser Rohkonturen befinden, die ausgeschlossen sind.

8. Vorrichtung nach Anspruch 7,
   **dadurch gekennzeichnet, dass** sie ferner Mittel (16) aufweist, um die Gruppe von Vielecken (P1, P2, P3) konform auf ein Bild (F) der geografischen Zone zu legen, um ein zusammengesetztes Bild (IF) zu erhalten.

9. Vorrichtung nach einem der Ansprüche 7 bis 8,
   **dadurch gekennzeichnet, dass** sie ferner Mittel (20) aufweist, die es einem Bediener erlauben, Daten in die Vorrichtung (1) einzugeben.

10. Vorrichtung nach einem der Ansprüche 7 bis 9,
    **dadurch gekennzeichnet, dass** sie ferner die Benutzermittel (22) aufweist.

## Claims

1. Method for automatically determining the contours of heights of the relief, such as hillocks and hills, of a geographical area (ZO), in particular terrestrial or submarine, according to which method the following successive operations are performed automatically:

   a) on the basis of an image of said geographical area (ZO), which contains altimetric data of points therein, the background surface of the relief which illustrates the gradual variations in the altitudes of said geographical area (ZO) is eliminated, by implementing what is known as a top hat algorithm, which uses a structuring element (28) which is adjustable;
   b) on the basis of the results of step a), thresholding is performed to form a binary image (IB) of the relief seen from above, containing only reliefs having heights above a threshold value which is adjustable, said thresholding being performed so as to preserve only the reliefs which are high enough to be exploited;
   c) from this binary image (IB) which comprises two different types (Z1, Z2) of area, rough contours of the heights of the relief are extracted, illustrating the boundaries between these two different types (Z1, Z2) of area;
   d) said rough contours are simplified so as to obtain a set of polygons (P1, P2, P3) illustrating the contours (C1, C2, C3) of the heights of the relief of said geographical area (ZO); and

   in an additional step, said set of polygons (P1, P2, P3) is analysed in order to define at least one attribute making it possible to characterise said polygons (P1, P2, P3), **characterised in that** said at least one attribute comprises at least high points, and, for determining the high points, points having local maximum heights (M1, and M2) are sought, by means of a threshold which is adjustable, and all the points found which are outside said rough contours are excluded.

2. Method according to claim 1,
   **characterised in that** in step d) said set of polygons (P1, P2, P3) is superimposed consistently on an image (F) of said geographical area (ZO) so as to obtain a composite image (IF).

3. Method according to either claim 1 or claim 2, **characterised in that** in step a) a sphere is used as a structuring element.

4. Method according to claim 2, **characterised in that** said attribute is highlighted in said composite image (IF).

5. Method according to any one of the preceding claims, **characterised in that** at least some of the following attributes, which are independent of the altitudes of the relief, are determined:

    - the distance from a target;
    - at least the area of a polygon;
    - at least a simple majorant rectangle which is associated with a polygon; and
    - at least a majorant convex polygon.

6. Method according to any one of the preceding claims, **characterised in that** at least some of the following attributes, which are dependent on the altitudes of the relief, are determined:

    - the mean altitude;
    - the standard deviation of the altitudes;
    - the maximum altitude; and
    - high points.

7. Device for automatically determining the contours of the heights of the relief, such as hillocks and hills, of a geographical area (ZO), in particular terrestrial or submarine, said device (1) comprising:

    - means (3) for receiving an image of said geographical area (ZO), which contains altimetric data of points in said area (ZO);
    - means (8) for eliminating, on the basis of said image, the background surface of the relief which illustrates the gradual variations in the altitudes of said geographical area (ZO), by implementing what is known as a top hat algorithm, which uses a structuring element (28) which is adjustable;
    - means (9) for performing thresholding in order to form a binary image (IB) of the relief seen from above, containing only reliefs having heights above a threshold value which is adjustable, said thresholding being performed so as to preserve only the reliefs which are high enough to be exploited;
    - means (11) for extracting from this binary image (IB), which comprises two different types (Z1, Z2) of area, rough contours of the heights of the relief, illustrating the boundaries between the two different types (Z1, Z2) of area;
    - means (13) for simplifying said rough contours so as to obtain a set of polygons (P1, P2, P3) illustrating said contours (C1, C2, C3) of the heights of the relief of said geographical area (ZO);
    - means (19) for transmitting said set of polygons (P1, P2, P3) to user means (22); and
    - means (34) for analysing said set of polygons (P1, P2, P3) with the aim of defining at least one attribute making it possible to characterise said polygons (P1, P2, P3), **characterised in that** said at least one attribute comprises at least high points, for determining the high points, points having local maximum heights (M1, and M2) being sought, by means of a threshold which is adjustable, and all the points found which are outside said rough contours being excluded.

8. Device according to claim 7, **characterised in that** it further comprises means (16) for superimposing said set of polygons (P1, P2, P3) consistently on an image (F) of said geographical area so as to obtain a composite image (IF).

9. Device according to any one of claims 7 to 8, **characterised in that** it further comprises means (20) allowing an operator to enter data into said device (1).

10. Device according to any one of claims 7 to 9, **characterised in that** it further comprises said user means (22).

Fig. 1

Fig. 2A

Fig. 2B

IB

Z1

Z2

Z1

## Fig. 3

M1

T1

M2

T1

## Fig. 4

M1

M2

T2

## Fig. 5

Fig. 6

**EP 2 533 201 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0863487 A